# EUROPÄISCHE PATENTSCHRIFT

(11) **EP 1 643 146 B1**
(45) Veröffentlichungstag und Bekanntmachung des Hinweises auf die Patenterteilung: **06.12.2006**
(21) Anmeldenummer: 04023521.0
(22) Anmeldetag: 02.10.2004
(51) Int. Cl.: F16D 23/12

(54) **Kupplungshebelanordnung**
Clutch lever arrangement
Disposition de levier d'embrayage

(43) Veröffentlichungstag der Anmeldung: 05.04.2006
(73) Patentinhaber: ZF FRIEDRICHSHAFEN AG, 88046 Friedrichshafen (DE)
(72) Erfinder: Brunner, Matthias, 97525 Schwebheim (DE); Lindner, Joachim, 97456 Dittelbrunn (DE)

(56) Entgegenhaltungen:
- DE-A1- 2 935 079
- GB-A- 1 240 463
- US-A- 4 529 077

## Beschreibung

Die Erfindung betrifft eine Kupplungshebelanordnung für eine Kraftfahrzeugkupplung, insbesondere für eine NKW-Kupplung, gemäß dem Oberbegriff des Patentanspruchs 1.

Kupplungshebel zur Übertragung einer Betätigungskraft auf ein gewöhnlich um eine Getriebeeingangswelle eines Schaltgetriebes angeordnetes Ausrücklager, das mit einer Ausrückfeder einer Reibungskupplung eines Fahrzeuges in Wirkverbindung steht, sind allgemein bekannt. Eine derartige Anordnung geht beispielsweise aus der DE 197 00 930 A1 hervor, bei der ein als Schwinge ausgebildeter Kupplungshebel über ein Kugelgelenk schwenkbar an einer Getriebewandung gelagert ist und auf welchen über das andere Ende einer Betätigungskraft zum Betätigen einer Reibungskupplung eingeleitet werden kann. Der dort dargestellte Kupplungshebel besitzt in dessen Längsmitte eine Ausnehmung, welche einen auf einem Führungsrohr angeordneten Ausrücker umschließt und sich zur Kraftübertragung mit einem Ringflansch des Ausrücklagers im Anlagekontakt befindet.

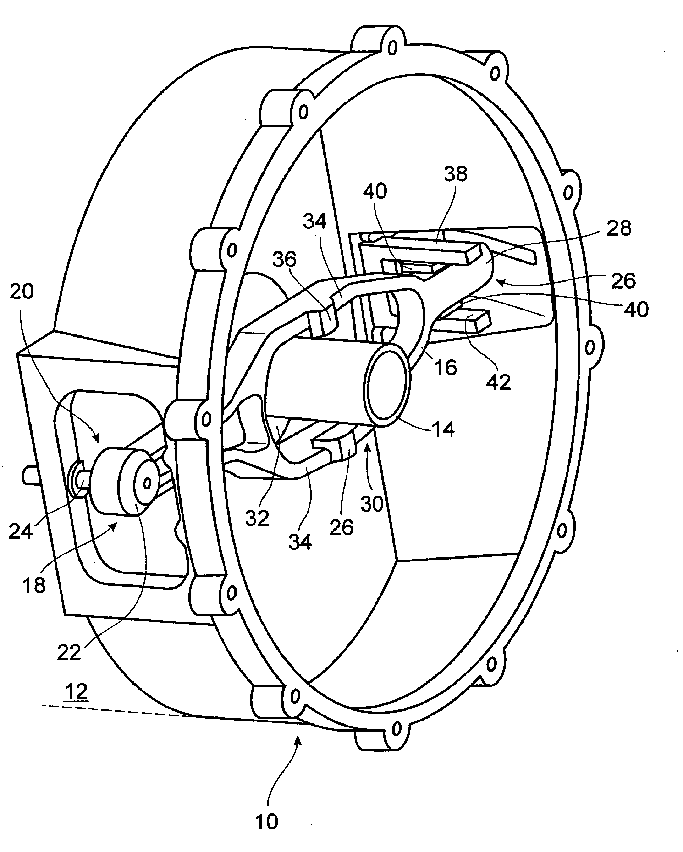

Bei dieser Anordnung wird es als nachteilig empfunden, dass trotz einer zur Vorspannung auf das Ausrücklager vorgesehenen Feder der Kupplungshebel beim Laufen eines Verbrennungsmotors und/oder bei einer Fahrzeugbewegung vorzugsweise vertikale Pendelbewegungen als auch Schwingungen in anderen Ebenen ausführen kann und dabei Kräfte sowohl auf das Ausrücklager als auch auf ein Betätigungsorgan, beispielsweise dem Stößel eines Nehmerzylinders, übertragen werden. Ausserdem wird im Falle einer von der Vertikalachse des Fahrzeuges abweichenden Lagerung des Kupplungshebels (Fig. 3 der DE 197 00 930 A1) der Ausrücker zumindest teilweise mit dessen Gewichtskraft belastet. Es kommt deshalb insgesamt zu unerwünschten, die Lebensdauer des Kupplungssystems reduzierenden Verschleißerscheinungen und bei einem hydraulischen Betätigungssystem zu spürbaren Auslenkungen des Kupplungspedals, was sich für den Fahrer als ein störendes Fußkribbeln bemerkbar macht und den Bedienkomfort einschränkt.

Das US-Patent 4,529,077 offenbart eine gattungsgemäße Kupplungshebelanordnung, wobei ein an einem Fahrzeug vertikal angeordneter Kupplungshebel um ein Schneidenlager verschwenkbar ist und den Kupplungshebel in zwei Hebelarme aufteilt. Ein Hebelarm greift an einem Ausrücklager zur Betätigung einer Fahrzeugkupplung an und der andere Hebelarm bildet mit dessen Endbereich eine Lagerstelle mit den Enden von zwei Aufhängearmen, welche mit deren anderen Enden jeweils schwenkbeweglich an einem Fahrzeugrahmen festgelegt sind. Die Lagerstelle bildet zugleich einen Kraftangriffsabschnitt zur Einleitung einer Betätigungskraft über ein entsprechendes Betätigungsorgan. Der Kupplungshebel ist im Bereich der Lagerstelle als U-Profil gestaltet, an dessen gegenüberliegenden Schenkeln die zwei aus einem Flachmaterial gefertigten Aufhängearme außen anliegen, wodurch der Kupplungshebel bei einer Verschwenkbewegung zur Betätigung der Kupplung innerhalb der Verschwenkebene geführt wird und eine Bewegung in anderer Richtung sicher unterbunden wird. Infolge der vertikalen bzw. im wesentlichen vertikalen Aufhängung des Kupplungshebels wird das Ausrücklager permanent mit einer Gewichtskraftkomponente des Kupplungshebels und somit auch mit dessen unerwünschten Pendelschwingungen belastet.

Die Erfindung stellt sich vom genannten Stand der Technik ausgehend die Aufgabe, unerwünschte Schwingungen eines in einem Kraftfahrzeug angeordneten Kupplungshebels zu reduzieren.

Diese Aufgabe wird gelöst durch eine gattungsgemäße Kupplungshebelanordnung, welche zusätzlich das im Kennzeichen des Anspruchs 1 aufgeführte Merkmal aufweist.

Erfindungsgemäß ist vorgesehen, dass die Führungsmittel mit dem Kupplungshebel eine definierte Reibstelle zur Schwingungsdämpfung ausbilden. Somit können parasitäre Schwingungen wirkungsvoll von einem hydraulischen Betätigungssystem ferngehalten werden und zusätzlich oder als Ersatz für ein hydraulisches Dämpfungsglied den Bedienkomfort der Fahrzeugkupplung wesentlich verbessern.

Vorteilhafte Ausgestaltungen und Weiterbildungen der Erfindung sind in den Unteransprüchen beschrieben.

Wenn, wie von der Erfindung vorgeschlagen, der Kupplungshebel nicht vertikal, sondem unter einem Winkel zur vertikalen Fahrzeugachse, besonders bevorzugt horizontal, an einem Fahrzeug angeordnet ist, so können einerseits vertikale Pendelschwingungen auf ein Minimum reduziert werden und andererseits nehmen die Führungsmittel bis zur Hälfte der Gewichtskraft auf, wodurch die Schwenklagerstelle entlastet und konstruktiv kleiner ausgelegt werden kann.

Zur Erzielung einer effektiven Kraftübertragung auf das Ausrücklager erweist es sich als günstig, die Lagerstelle und den Kraftangriffsabschnitt jeweils an den Endbereichen und den Kraftübertragungsabschnitt im Bereich der Längsmitte des Kupplungshebels anzuordnen.

Vorteilhafterweise sind die Führungsmittel im Bereich des Kraftangriffsabschnittes angeordnet, wodurch die Einleitung von unerwünschten Kräften auf ein Betätigungsorgan besonders sicher unterbunden werden kann.

Für die Übertragung von sehr hohen Kupplungsausrückkräften, wie dieses beispielsweise bei einem NKW der Fall ist, lässt sich die erforderliche Festigkeit des Kupplungshebels besonders einfach darstellen, wenn dieser als Gussteil, beispielsweise aus einem Eisen- oder Aluminiumgusswerkstoff gefertigt ist.

Die Erfindung wird nachfolgend anhand der beiliegenden Figur beispielhaft erläutert.

Die einzige Figur zeigt eine zu einer nicht weiter im Detail dargestellten Reibungskupplung hin offene Glocke 10 als Bestandteil eines Kraftfahrzeug-Schaltgetriebes 12 mit einem etwa im Zentrum angeordneten Führungsrohr 14, welches dort eine nicht dargestellte Getriebeeingangswelle umschließt, die auch gleichzeitig die Ausgangswelle der Reibungskupplung darstellt. Innerhalb der Getriebeglocke 10 ist horizontal ein vorzugsweise als Guss-, Schmiede- oder Tiefziehblechteil aus Stahl gefertigter Kupplungshebel 16 angeordnet, wobei zur Verschwenkung des Kupplungshebels an dessen einem Ende 18 ein Kugelgelenk 20 mit einer am Kupplungshebel ausgebildeten Kugelpfanne 22 und einem Kugelzapfen 24 ausgeführt ist, wobei letzterer fest mit der Getriebeglocke 10 verschraubt ist. An dem anderen Ende 26 ist ein ebenfalls pfannenförmiger Kraftangriffsabschnitt 28 zur Einleitung einer Betätigungskraft von einem nicht dargestellten Betätigungsorgan vorgesehen. Als Betätigungsorgan dient beispielsweise der Stößel eines Nehmerzylinders einer hydraulischen Kupplungsbetätigungsvorrichtung oder eine mit einem elektromotorischen Aktuator verbundene Stange bzw. Spindel. Die seitliche Anordnung des Betätigungsorganes erweist sich insbesondere aus Bauraumgründen äußerst vorteilhaft.

Der Kupplungshebel 16 weist in dessen Mittenbereich 30 ein sich längs zu dessen Ausdehnung erstreckendes Langloch 32 auf, an dessen Randbereichen 34 jeweils ein vom Grundkörper vorspringender Kraftübertragungsabschnitt 36 ausgebildet ist. Dieser dient der Übertragung einer von dem Betätigungsorgan auf den Kupplungshebel 16 eingeleiteten Betätigungskraft auf ein zeichnerisch nicht dargestelltes, axial in einer Verschwenkebene des Kupplungshebels 16 auf dem Führungsrohr 14 axial verschiebbar angeordnetes Ausrücklager, welches wiederum in Wirkverbindung mit einer Ausrückfeder der Reibungskupplung steht. Im Bereich des Kraftangriffsabschnittes 28 wird der Kupplungshebel 16 durch ein als in der Figur liegendes u-förmiges, vorzugsweise Stahl- oder Aluminium-Element 38 ausgebildetes Führungsmittel auf dessen Verschwenkebene geführt. Dazu weist der Kupplungshebel 16 in diesem Bereich an der Ober- und an der Unterseite je ein Gleitsegment 40 aus einem gleitfähigen Werkstoff, beispielsweise Bronze, Messing oder Kunststoff, auf, das im Gleitkontakt mit der Innenoberfläche 42 des u-förmigen Elementes befindlich ist. Die Gleitsegmente 40 sind lösbar, bspw. mittels einer Schraub- oder Nietverbindung in dem Kupplungshebel 16 angeordnet, so dass diese bei Verschleiß leicht ersetzt werden können. Alternativ kann der Kupplungshebel auch nur einseitig von den Führungsmitteln 38, z.B. an einem Arm hängend oder auf einem Arm aufliegend angeordnet sein oder mittels einer Führungsstange o.ä. Mitteln geführt werden. Die Gleitsegmente 40 können alternativ selbstverständlich auch an den Führungsmitteln 38 realisiert sein.

Die Toleranzen sind so bemessen, dass die Führungsmittel 38 eine Gleitlagerung des Kupplungshebels ermöglichen und somit bei der dargestellten horizontalen Anordnung die Gewichtskraft des Kupplungshebels 16 gleichermaßen auf das Kugelgelenk und den unteren Abschnitt des u-förmigen Elements 38 verteilen. Die Kontaktstelle an den Führungsmitteln 38 ist jedoch gleichzeitig so optimiert, dass diese noch eine gewisse, definierte und nach Anwendungsfall frei wählbare Reibung zulässt und dadurch unerwünschte Schwingungen am Kupplungshebel 16 effektiv bedämpfen kann. Die Reibstelle zwischen dem Kupplungshebel 16 und dem Führungsmittel 38 ist dabei so ausgelegt, dass die Betätigungs- und die Rückstellkraft der Kupplung gegenüber der dort wirkenden Reibkraft um ein Mehrfaches überwiegen, das heißt eine nachteilige Wirkung nicht spürbar ist. Der Kraftangriffsabschnitt 28 an dem Kupplungshebel 16 kann ebenfalls, wie dessen Lagerstelle, als Kugelgelenk zum Eingriff eines Kugelzapfens ausgebildet sein. Die Wirkungsweise und sonstige Ausbildung des Kupplungshebels 16 entspricht demjenigen eines bereits aus dem Stand der Technik bekannten.

### Bezugszeichenliste

- 10: Getriebeglocke
- 12: Schaltgetriebe
- 14: Führungsrohr
- 16: Kupplungshebel
- 18: Ende
- 20: Kugelgelenk
- 22: Kugelpfanne
- 24: Kugelzapfen
- 26: Ende
- 28: Kraftangriffsabschnitt
- 30: Mittenbereich
- 32: Langloch
- 34: Randbereich
- 36: Kraftübertragungsabschnitt
- 38: Führungsmittel
- 40: Gleitsegment
- 42: Innenoberfläche

## Patentansprüche

1. Kupplungshebelanordnung für eine Kraftfahrzeugkupplung, insbesondere für eine NKW-Kupplung, umfassend einen Kupplungshebel (16), der schwenkbeweglich an einer Lagerstelle (20) an einem ortsfesten Bauteil (10) gelagert ist, wobei der Kupplungshebel (16) aufweist
- einen Kraftangriffsabschnitt (28) zur Einleitung einer Betätigungskraft über ein Betätigungsorgan,
- einen Kraftübertragungsabschnitt (36) zur Übertragung der Betätigungskraft auf ein axial, in einer Verschwenkebene des Kupplungshebels (16) verschiebbar angeordnetes Ausrücklager, wobei
- der Kupplungshebel (16) durch ortsfest zu diesem angordnete Führungsmittel (38) in dessen Verschwenkebene geführt wird,
**dadurch gekennzeichnet,**
**dass** die Führungsmitlel (38) mit dem Kupplungshebel (16) eine definierte Reibstelle zur Dämpfung von innerwünschten Schwingemgen ausbilden.

2. Kupplungshebelanordnung nach Anspruch 1,
**dadurch gekennzeichnet,**
**dass** die Lagerstelle (20) und der Kraftangriffsabschnitt (28) jeweils an den Endbereichen (18, 26) und der Kraftübertragungsabschnitt (36) im Bereich der Längsmitte (30) des Kupplungshebels (16) angeordnet sind.

3. Kupplungshebelanordnung nach Anspruch 1 oder 2,
**dadurch gekennzeichnet, dass** die Führungsmittel (38) im Bereich des Kraftangriffsabschnittes (28) angeordnet sind.

4. Kupplungshebelanordnung nach einem der vorhergehenden Ansprüche,
**dadurch gekennzeichnet,**
**dass** der Kupplungshebel (16) unter einem Winkel zur vertikalen Fahrzeugsachse angeordnet ist.

5. Kupplungshebelanordnung nach einem der vorhergehenden Ansprüche,
**dadurch gekennzeichnet,**
**dass** der Kupplungshebel (16) als Gussteil ausgebildet ist.

## Claims

1. Clutch lever arrangement for a vehicle clutch, in particular for a commercial vehicle clutch, including a clutch lever (16) which is mounted to be pivotally movable at a bearing point (20) on a fixed component (10), the clutch lever (16) having
- a section (28) for the application of force, for introducing an actuating force by way of an actuating member,
- a section (36) for the transmission of force, for transmitting the actuating force to a release bearing which is arranged to be axially displaceable in a plane of pivoting of the clutch lever (16),
- with the clutch lever (16) guided in its plane of pivoting by guide means (38) which are arranged fixed in relation thereto,
**characterised in that**
- the guide means (38) create, with the clutch lever, a defined friction point for damping undesirable vibrations.

2. Clutch lever arrangement according to Claim 1, **characterised in that** the bearing point (20) and the section (28) for the application of force are arranged at the respective end regions (18, 26), and the section (36) for the transmission of force is arranged in the region of the longitudinal centre (30) of the clutch lever (16).

3. Clutch lever arrangement according to Claim 1 or 2, **characterised in that** the guide means (38) are arranged in the region of the section (28) for the application of force.

4. Clutch lever arrangement according to one of the preceding claims, **characterised in that** the clutch lever (16) is arranged at an angle to the vertical axis of the vehicle.

5. Clutch lever arrangement according to one of the preceding claims, **characterised in that** the clutch lever (16) is in the form of a cast part.

## Revendications

1. Dispositif de levier d'embrayage pour l'embrayage d'un véhicule automobile et en particulier l'embrayage d'un véhicule utilitaire ("NKW"), qui comprend un levier d'embrayage (16) monté à pivotement en un emplacement de montage (20) installé sur un composant fixe (10), le levier d'embrayage (16) présentant :
- une partie (28) d'application de force qui permet d'appliquer une force d'actionnement par l'intermédiaire d'un organe d'actionnement,
- une partie (36) de transfert de force qui transfère la force d'actionnement à un palier de débrayage disposé de manière à pouvoir coulisser axialement dans le plan de pivotement du levier d'embrayage (16),
- le levier d'embrayage (16) étant guidé dans son plan de pivotement par des moyens de guidage (38) disposés en position fixe par rapport à lui,
**caractérisé en ce que**
les moyens de guidage (38) forment avec le levier d'embrayage (16) un emplacement dont le frottement est défini de manière à amortir les vibrations indésirables.

2. Agencement de levier d'embrayage selon la revendication 1, **caractérisé en ce que** l'emplacement de montage (20) et la partie (28) d'application de force sont tous deux disposés sur les parties d'extrémité (18, 26), la partie (36) de transfert de force étant disposée dans la zone du milieu (30) de la longueur du levier d'embrayage (16).

3. Agencement de levier d'embrayage selon les revendications 1 ou 2, **caractérisé en ce que** les moyens de guidage (38) sont disposés dans la zone de la partie (28) d'application de force.

4. Agencement de levier d'embrayage selon l'une des revendications précédentes, **caractérisé en ce que** le levier d'embrayage (16) est disposé obliquement par rapport à l'axe vertical du véhicule.

5. Agencement de levier d'embrayage selon l'une des revendications précédentes, **caractérisé en ce que** le levier d'embrayage (16) est réalisé sous la forme d'une pièce coulée.
